# EUROPÄISCHE PATENTSCHRIFT

(11) **EP 2 705 282 B1**
(45) Veröffentlichungstag und Bekanntmachung des Hinweises auf die Patenterteilung: **04.11.2015**
(21) Anmeldenummer: 12719589.9
(22) Anmeldetag: 30.04.2012
(51) Int. Cl.: F16H 63/48

(54) **VORRICHTUNG ZUM BETREIBEN EINER PARKSPERRE EINES KRAFTFAHRZEUGS SOWIE ENTSPRECHENDES VERFAHREN**
DEVICE FOR OPERATING A PARKING BRAKE OF A MOTOR VEHICLE AND CORRESPONDING METHOD
DISPOSITIF POUR ACTIONNER UN FREIN DE STATIONNEMENT D'UN VÉHICULE À MOTEUR ET PROCÉDÉ CORRESPONDANT

(30) Priorität: 06.05.2011 DE 102011100804
(43) Veröffentlichungstag der Anmeldung: 12.03.2014
(73) Patentinhaber: Audi AG, 85045 Ingolstadt (DE)
(72) Erfinder: SCHULLER, Dietmar, 93336 Altmannstein (DE); BAUER, Martin, 85053 Ingolstadt (DE)
(74) Vertreter: Wohnert, Dietmar
(86) Internationale Anmeldenummer: PCT/EP2012/001848
(87) Internationale Veröffentlichungsnummer: WO 2012/152394

(56) Entgegenhaltungen:
- EP-A2- 1 855 033
- DE-A1- 19 820 920
- DE-A1-102004 030 007
- DE-A1-102006 053 762

## Beschreibung

Die Erfindung betrifft eine Vorrichtung zum Betreiben einer Parksperre eines Kraftfahrzeugs, wobei die Parksperre eine betätigbare Aktoreinrichtung zum Auslegen der Parksperre entgegen eines Rückstelldrucks sowie eine betätigbare Haltevorrichtung zum Halten der Parksperre im ausgelegten Zustand umfasst.

Ferner betrifft die Erfindung ein Verfahren zum Betreiben einer Parksperre eines Kraftfahrzeugs, wobei die Parksperre eine betätigbare Aktoreinrichtung zum Auslegen der Parksperre entgegen eines Rückstelldrucks sowie eine betätigbare Haltevorrichtung zum Halten der Parksperre im ausgelegten Zustand umfasst.

Vorrichtungen und Verfahren der eingangs genannten Art sind aus dem Stand der Technik bekannt. Eine Parksperre dient dazu, das Getriebe, insbesondere das Automatikgetriebe eines Kraftfahrzeugs, zu sperren, wenn sich das Kraftfahrzeug im Stillstand befindet, sodass Antriebsräder des Fahrzeugs durch das Getriebe blockiert sind. Ferner ist es bekannt, die Parksperre in Abhängigkeit von bestimmten Parametern automatisch einzulegen, um das Kraftfahrzeug festzusetzen. So ist es bei modernen Kraftfahrzeugen bekannt, dass automatisch die Parksperre eingelegt wird, wenn der Zündschlüssel vom Zündschloss abgezogen wird, wodurch ein Wegrollen des Fahrzeugs verhindert wird.

Aus der deutschen Offenlegungsschrift DE 196 25 019 Al ist beispielsweise eine Vorrichtung bekannt, mittels derer die Parksperre betätigt wird. Hierbei umfasst die Parksperre Mittel zum Einlegen der Parksperre sowie eine Haltevorrichtung in Form eines Haltemagnets zum Halten der Parksperre im ausgelegten Zustand, sodass die Haltevorrichtung ein Einlegen der Parksperre verhindert. Der Haltemagnet wird dabei durch ein Getriebesteuergerät angesteuert, während die Mittel zum Einlegen der Parkbremse in Abhängigkeit von Signalen vom Zündschloss, der Fahrzeuggeschwindigkeit und der Drehzahl eines Motors agiert. Die bekannte Vorrichtung hat den Nachteil, dass, wenn das Getriebesteuergerät ausfällt, das Einlegen der Parksperre nicht verhindert werden kann.

Die Offenlegungsschrift DE 10 2006 053 762 A1 offenbart eine Vorrichtung zum Betreiben einer Parksperre, die eine betätigbare Aktoreinrichtung zum Auslegen der Parksperre entgegen eines Rückstelldrucks sowie eine betätigbare Haltevorrichtung zum Halten der Parksperre im ausgelegten Zustand umfasst. Eine Getriebesteuerung ist dabei mit der Aktoreinrichtung und eine weitere Steuerung mit der Haltevorrichtung verbunden.

Der Erfindung liegt somit die Aufgabe zugrunde, eine Vorrichtung sowie ein Verfahren zu schaffen, die es auf einfache Art und Weise ermöglichen, die Sicherheit und Funktionsfähigkeit der Parkbremse zu verbessern.

Die der Erfindung zugrundeliegende Aufgabe wird durch die Merkmale der Ansprüche 1 und 10 gelöst.

Die erfindungsgemäße Vorrichtung zeichnet sich dabei dadurch aus, dass sie ein Wählhebelsteuergerät und ein damit kommunizierendes Getriebesteuergerät umfasst, wobei das Wählhebelsteuergerät die Haltevorrichtung und das Getriebesteuergerät die Aktoreinrichtung jeweils betätigen. Aus modernen Kraftfahrzeugen sind Wählhebelsteuergeräte bekannt, die dem Wählhebel beziehungsweise Schalthebel, der durch den Fahrer bedienbar ist, zugeordnet sind, um den Fahrerwunsch bezüglich der Schaltstufe zu erfassen und gegebenenfalls eine entsprechende Anzeigeeinheit anzusteuern, die den Fahrerwunsch wiedergibt. Erfindungsgemäß ist das Wählhebelsteuergerät mit der Haltevorrichtung verbunden, während das Getriebesteuergerät mit der Aktoreinrichtung verbunden ist. Somit kann mittels des Getriebesteuergeräts die Aktoreinrichtung betätigt und damit die Parksperre gelöst beziehungsweise ausgelegt werden. Durch entsprechendes Ansteuern der Haltevorrichtung mittels des Wählhebelsteuergeräts lässt sich die Parksperre in ihrem ausgelegten Zustand auch dann noch halten, wenn das Getriebesteuergerät ausfällt. Dadurch kann der Fahrer selbst bestimmen, ob bei einem Ausfall des Getriebesteuergeräts die Parksperre eingelegt werden oder ein Weiterbewegen des Kraftfahrzeugs ermöglicht werden soll. Dadurch wird die Funktion der Parksperre im Vergleich zum Stand der Technik mit einfachen Mitteln weiter gewährleistet und eine höhere Sicherheit bei einem (Teil-) Systemausfall geboten.

Besonders bevorzugt ist vorgesehen, dass das Getriebesteuergerät in Abhängigkeit von der Schaltstellung eines Wählhebels, die durch das Wählhebelsteuergerät erfassbar ist, abschaltbar ist beziehungsweise abgeschaltet wird. Hierbei ist also vorgesehen, dass, wenn das Wählhebelsteuergerät einen entsprechenden Fahrerwunsch durch Erkennen einer bestimmten Schaltstellung des Wählhebels erfasst, das Getriebesteuergerät abschaltbar ist beziehungsweise bevorzugt abgeschaltet wird. Insbesondere handelt es sich bei der Schaltstellung des Wählhebels um eine Parkstellung und/oder Neutralstellung, in welcher kein Gang zur Übertragung eines Drehmoments auf Antriebsräder des Kraftfahrzeugs eingelegt ist. Schaltet der Fahrer nun den Wählhebel in die neutrale Schaltstellung, so wird das Getriebegerät, das in diesem Moment auch nicht weiter benötigt wird, abgeschaltet, was zu deutlichen Energie- beziehungsweise Stromeinsparungen führt. Bewegt der Fahrer den Wählhebel in eine andere Schaltstellung, wird das Getriebesteuergerät vorzugsweise wieder aktiviert. In der Neutralstellung hat der Fahrer jedoch die Wahl, ob er die Parksperre einlegen möchte, obwohl das Getriebesteuergerät abgeschaltet ist, beispielsweise durch Einlegen der Wählhebelstellung P.

Vorzugsweise kommunizieren das Getriebesteuergerät und das Wählhebelsteuergerät durch mindestens eine kabelgebundene oder kabellose Datenverbindung, insbesondere über ein Bus-System miteinander und/oder mit der Haltevorrichtung beziehungsweise Aktoreinrichtung. Besonders bevorzugt ist vorgesehen, dass das Wählhebelsteuergerät als Slave ausgebildet ist und das Getriebesteuergerät als Master. Im Normalbetrieb gibt somit das Getriebesteuergerät den Befehl zum Einlegen der Parkbremse und zum Lösen der Haltevorrichtung, also zum Freigeben der Parksperrfunktion, wobei der Befehl zum Lösen der Haltevorrichtung dann durch das Wählhebelsteuergerät durch dessen Betätigung der Haltevorrichtung ausgeführt wird. Das Getriebesteuergerät sammelt bevorzugt Daten betreffend das Getriebe, wie beispielsweise Kühlmitteltemperatur, Wählhebelposition, Ist-Fahrstufe, Fahrzeug-Ist-Geschwindigkeit, Zündschlüsselstellung, Hydraulikdruck und/oder mindestens eine Drehzahl. In Abhängigkeit von dem Betriebszustand des Getriebesteuergeräts kann dieses darüber hinaus Befehle an das Wählhebelsteuergerät abgeben, sodass dieses beispielsweise das Einlegen von bestimmten Schaltstellungen des Wählhebels verhindert, sodass beispielsweise das Einlegen der Parkstellung P, in welcher bevorzugt die Parksperre automatisch eingelegt wird, nicht einlegbar ist, während das Kraftfahrzeug beschleunigt oder eine vorgegebene Fahrgeschwindigkeit überschritten hat.

Gemäß einer vorteilhaften Weiterbildung der Erfindung ist vorgesehen, dass das Wählhebelsteuergerät und das Getriebesteuergerät unabhängig voneinander mit einer Energiequelle oder jeweils mit einer Energiequelle des Kraftfahrzeugs verbindbar/verbunden sind. Hierdurch wird gewährleistet, dass auch bei Ausfall eines der Steuergeräte das andere Steuergerät weiter mit Energie versorgt und somit seine Funktion im Wesentlichen Erfüllen kann. Durch eine derartige Aufteilung der Ansteuerung von Haltevorrichtung und Aktoreinrichtung ist es möglich, ohne weitere zusätzliche Ventile oder Einrichtungen die Sicherheitsanforderungen an die Parkbremsenbetätigung zu erfüllen.

Gemäß einer bevorzugten Weiterbildung der Erfindung ist vorgesehen, dass die Aktoreinrichtung als elektrisch betätigbare Aktoreinrichtung ausgebildet ist und insbesondere ein elektrisch betätigbares Hydraulikventil umfasst. Das Hydraulikventil ist zweckmäßigerweise einem Hydraulikaktor vorgeschaltet, welcher die Parksperre betätigt. Alternativ ist es auch denkbar, einen elektromotorisch betätigenden Aktor vorzusehen. Durch entsprechendes Betätigen des Hydraulikventils wird der hydraulische Aktor angesteuert und dadurch die Parksperre ausgelegt beziehungsweise ein Einlegen der Parksperre erlaubt. Insbesondere durch Beaufschlagen des Hydraulikaktors mit Druck durch entsprechendes Schalten des Hydraulikventils wird die Parksperre ausgelegt. Hierbei sei angemerkt, dass die Aktoreinrichtung derart ausgebildet ist, dass sie die Parksperre nicht nur auslegt, sondern bei Bedarf auch ausgelegt hält, sodass auch ohne Betätigen der Haltevorrichtung ein dauerhaftes Auslegen der Parkbremse durch die Aktoreinrichtung möglich ist.

Vorzugsweise ist das Hydraulikventil derart ausgebildet, dass es in einer ersten Extremalstellung den die Parksperre hydraulisch betätigenden Aktor mit der Druckquelle verbindet, um die Parksperre entgegen dem Rückstelldruck auszulegen, und in einer zweiten Extremalstellung den Aktor hydraulisch drucklos schaltet. In der zweiten Extremalstellung wird dabei der Aktor aufgrund des Rückstelldrucks in seine Ausgangslage zurückgedrängt, in welcher die Parksperre eingelegt ist. Vorzugsweise ist das Hydraulikventil dazu als Schaltventil ausgebildet. Alternativ ist es auch denkbar, das Hydraulikventil als Proportionalventil vorzusehen, um beispielsweise die Betätigungsgeschwindigkeit des Aktors beeinflussen zu können.

Gemäß einer vorteilhaften Weiterbildung der Erfindung ist vorgesehen, dass zur Erzeugung beziehungsweise Bereitstellung des Rückstelldrucks dem Aktor beziehungsweise dem hydraulisch betätigbaren Aktor eine Rückstellfeder, also ein die Rückstellkraft mechanisch bereitstellendes Element zugeordnet ist, insbesondere in Form einer Schraubenfeder. Natürlich können auch zwei oder noch weitere Rückstellfedern dem Aktor zugeordnet sein. Bevorzugt ist parallel zur Rückstellfeder eine Rückführung von hydraulischem Druck vorgesehen, die zur redundanten Rückstellung des Aktors vorgesehen ist. Besonders bevorzugt wird der zum Auslegen notwendige Strom gemessen beziehungsweise erfasst und mit einem zu erwartenden Strom verglichen. Aus dem Vergleichsergebnis wird darauf geschlossen, ob zumindest einer der Rückstellmechanismen, Rückstellfeder und/oder druckgeführter hydraulischer (Rückstell-) Druck ausgefallen ist oder nicht korrekt arbeitet.

Bevorzugt weist die Haltevorrichtung eine elektromagnetisch betätigbare Sperrmechanik zum formschlüssigen Halten des Aktors beziehungsweise der Parksperre im ausgelegten Zustand auf. Die Sperrmechanik zeichnet sich dadurch aus, dass sie den Aktor formschlüssig hält, sodass keine hohen Stellkräfte oder Ströme notwendig sind, um den Aktor in seiner ausgelegten Stellung zu halten. Durch die insbesondere elektromagnetische Betätigung der Sperrmechanik lässt sich hierdurch eine Haltevorrichtung bereitstellen, die einen geringen Stromverbrauch aufweist. Vorzugsweise hält die Sperrmechanik den Aktor in der ausgelegten Stellung, solange sie bestromt wird. Im stromlosen Zustand gibt die Sperrmechanik den Aktor frei. Dies ist besonders vorteilhaft, wie zuvor beschrieben, wenn auch das Getriebesteuergerät abgeschaltet wird. Gemäß einer alternativen Ausführungsform ist es jedoch auch denkbar, die Sperrmechanik derart zu gestalten, dass sie im stromlosen Zustand den Aktor hält und bei Strombeaufschlagung freigibt, sodass die Parksperre eingelegt wird.

Das erfindungsgemäße Verfahren zeichnet sich dadurch aus, dass die Haltevorrichtung durch ein Wählhebelsteuergerät und die Aktoreinrichtung durch ein Getriebesteuergerät betätigt werden. Besonders bevorzugt wird das Getriebesteuergerät in Abhängigkeit von einer durch das Wählhebelsteuergerät erfassten Wählhebelposition/-stellung abgeschaltet, um Strom beziehungsweise Energie zu sparen. Weitere Vorteile ergeben sich aus dem zuvor Beschriebenen. Insbesondere wird mittels des Verfahrens die Vorrichtung, wie sie oben beschrieben wurde, betätigt beziehungsweise betrieben.

Im Folgenden soll die Erfindung anhand der Zeichnung näher erläutert werden. Dazu zeigen
- Figur 1: die erfindungsgemäße Vorrichtung in einer vereinfachten Darstellung und
- Figur 2: einen Ausschnitt eines Hydraulikkreises zur Betätigung der Aktoreinrichtung.

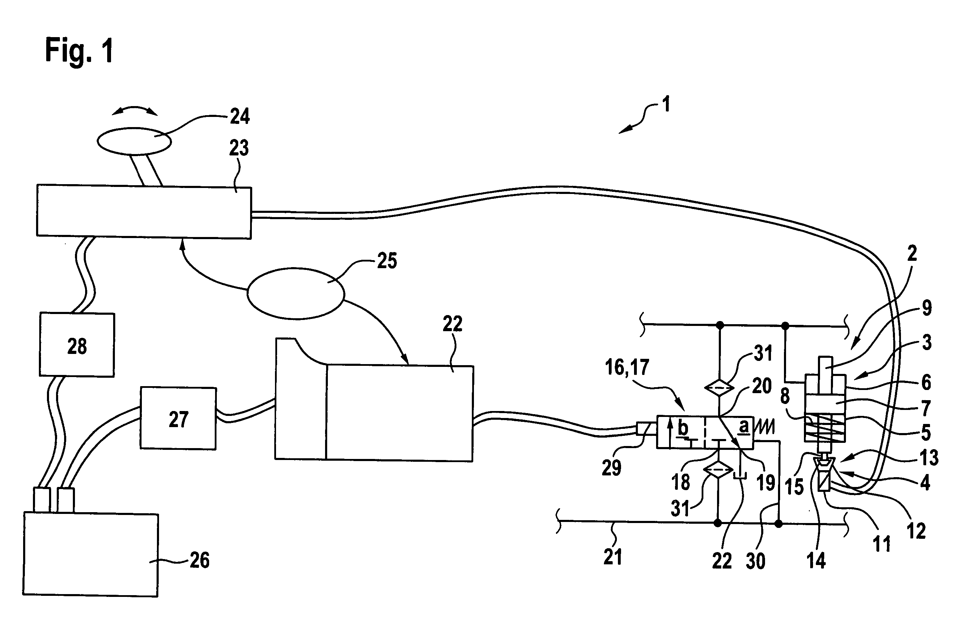

Figur 1 zeigt in einer vereinfachten Darstellung eine Vorrichtung 1 zum Betreiben einer Parksperre 2 eines Kraftfahrzeugs. Die Parksperre 2 weist eine Aktoreinrichtung 3 sowie eine Haltevorrichtung 4 auf. Mittels der Aktoreinrichtung 3 ist die Parksperre 2 auslegbar beziehungsweise kann ausgelegt gehalten werden. Dazu umfasst die Aktoreinrichtung einen hydraulischen Aktor 5, der einen in einem Zylinder 6 axial verlagerbar gehaltenen Kolben 7 aufweist, wobei der Kolben 7 das Sperrelement 9 der Parksperre 2 aufweist oder bildet. Der Kolben 7 ist einseitig mit Druck beaufschlagtem Hydraulikmedium beaufschlagbar, und anderseitig von einer Rückstellfeder 8 beaufschlagt, welche den Kolben 7 in die Sperrposition drängt, also zum Einlegen der Parksperre 2 dient. Die Rückstellfeder 8 ist vorzugsweise als Schraubenfeder ausgebildet und zwischen einer Stirnseite des Kolbens 7 und einer Stirnseite des Zylinders 6 verspannt gehalten.

Während das als Sperrelement 9 dienende Ende des Kolbens 7 den Zylinder 6 an einer Stirnseite durchdringt, durchdringt ein als Halteelement 10 dienendes Ende des Kolbens 7 den Zylinder 6 auf der gegenüberliegenden Seite. Dieser Seite ist die Haltevorrichtung 4 zugeordnet. Die Haltevorrichtung 4 umfasst einen Elektromagneten 11, der auf eine Sperrmechanik 12 wirkt. Die Sperrmechanik 12 ist vorliegend als Greifarmpaar 13 ausgebildet. Das Halteelement 10 des Kolbens 7 weist endseitig einen kegelstumpfförmigen Einführabschnitt 14 auf, an den sich eine Verjüngung 15 anschließt. Wird der Aktor 5 betätigt, so wird der Kolben 7 in Richtung der Haltevorrichtung 4 verlagert, wobei das Einführende zwischen die Greifarme 13 tritt und aufgrund der Kegelstumpfform diese auseinanderdrückt werden bis sie in die Verjüngung 15 zurückfallen und dadurch das Einführende 14 formschlüssig hintergreifen, wodurch der Kolben 7 in der ausgelegten Stellung der Parksperre 2 gehalten ist. Durch Betätigen des Elektromagneten 11 werden die Greifarme 13 aufeinander zu bewegt beziehungsweise geschwenkt, sodass der Kolben 7 in seiner ausgelegten Stellung gehalten wird. Wird der Elektromagnet 11 stromlos geschaltet, so bewegen sich die Greifarme 13 voneinander weg, sodass der Kolben 7 freigegeben wird, wonach die Rückstellfeder 8 den Kolben 7 in die Sperrposition drängt. Vorzugsweise ist den Greifarmen 13 wenigstens ein Federelement zugeordnet, das entgegen der Kraft des strombeaufschlagten Magneten wirkt, wodurch die Greifarme 13 bei Stromlosschaltung die Greifarme 13 voneinander weg bewegen beziehungsweise schwenken.

Zum Betätigen des Aktors 5 ist ein Hydraulikventil 16 vorgesehen, das als Schaltventil 17 ausgebildet ist und zwei Schaltstellungen a, b sowie drei Anschlüsse 18, 19, 20 aufweist. Der Anschluss 18 ist mit einer eine Druckquelle darstellenden Druckleitung 21 verbunden, während der Anschluss 19 mit einem Hydrauliktank 22 verbunden ist und der Anschluss 20 mit dem Zylinder 6 beziehungsweise dem Aktor 5. In der Schaltstellung a ist der Aktor 5 mit dem Hydrauliktank 22 verbunden, also drucklos geschaltet, sodass die Rückstellfeder 8 den Kolben 7 in die Sperrposition verlagert, wenn die Greifarme 13 den Kolben 7 freigegeben haben. In der Schaltstellung b verbindet das Schaltventil 17 die Druckleitung 21 mit dem Aktor 5, sodass der Kolben 7 entgegen des Rückstelldrucks der Rückstellfeder 8 verlagert und dadurch die Parksperre ausgelegt wird.

Die Vorrichtung 1 umfasst weiterhin ein Getriebesteuergerät 22 eines Getriebes des Kraftfahrzeugs, das vorzugsweise als Automatikgetriebe ausgebildet ist. Weiterhin weist die Vorrichtung 1 ein Wählhebelsteuergerät 23 auf, das einem Wählhebel 24 zugeordnet ist. Das Wählhebelsteuergerät 23 erfasst beispielsweise die Position beziehungsweise Schaltstellung des Wählhebels 24, die durch den Fahrer des Kraftfahrzeugs vorgebbar ist. Das Wählhebelsteuergerät 23 und das Getriebesteuergerät 22 kommunizieren über eine Datenverbindung 25 miteinander. Das Getriebesteuergerät 22 ist dabei als Master und das Wählhebelsteuergerät 23 als Slave ausgebildet, sodass die wesentliche Steuerung beziehungsweise Logik in dem Getriebesteuergerät 22 stattfindet beziehungsweise lokalisiert ist. Das Getriebesteuergerät 22 betätigt beispielsweise die Hydraulik des Getriebes entsprechend der Wählhebelposition des Wählhebels 24, um ein gewünschtes Übersetzungsverhältnis, insbesondere auch in Abhängigkeit von Geschwindigkeit und Drehzahl, einzustellen.

Das Getriebesteuergerät 22 ist mit einem Energiespeicher 26 des Kraftfahrzeugs verbunden. Ebenso ist das Wählhebelsteuergerät 23 mit dem Energiespeicher 26, jedoch über eine separate Leitung verbunden, sodass die beiden Steuergeräte unabhängig voneinander mit der Energiequelle 26 verbunden sind. Bei der Energiequelle 26 handelt es sich vorzugsweise um einen wiederaufladbaren elektrischen Speicher, der besonders bevorzugt einer elektrischen Maschine einer Antriebsvorrichtung des Kraftfahrzeugs zugeordnet ist, wobei die Antriebsvorrichtung besonders bevorzugt als Hybridantriebsvorrichtung ausgebildet ist. Zwischen dem Getriebesteuergerät 22 und dem Energiespeicher 26 sowie zwischen dem Wählhebelsteuergerät 23 und dem Energiespeicher 26 ist jeweils bevorzugt eine Sicherung 27, 28 vorgesehen beziehungsweise zwischengeschaltet, die die Steuergeräte vor zu hohen Spannungen schützt.

Das Getriebesteuergerät 22 ist weiterhin durch eine entsprechende elektrische Leitung mit der Aktoreinrichtung 3 elektrisch wirkverbunden. Insbesondere ist das Getriebesteuergerät 22 mit einem elektrisch betätigbaren Aktor 29 des Hydraulikventils 16 verbunden. Das Wählhebelsteuergerät 23 ist hingegen durch eine entsprechende elektrische Leitung mit dem Elektromagneten 11 der Haltevorrichtung 4 verbunden.

Somit wird die Haltevorrichtung 4 durch das Wählhebelsteuergerät 23 und die Aktoreinrichtung 3 durch das Getriebesteuergerät 22 betätigt beziehungsweise angesteuert. Hierdurch wird gewährleistet, dass auch bei einem Ausfall des Getriebesteuergeräts 22 die ausgelegte Parkbremse 2 bei Bedarf zum einen ausgelegt bleiben und zum anderen durch Betätigen des Elektromagneten 11 eingelegt werden kann. Hierdurch wird die Sicherheit des Bremssystems wesentlich erhöht, da es dem Fahrer auch bei ausgefallenem Getriebesteuergerät 22 möglich ist, die Parksperre zu betätigen.

Bevorzugt ist vorgesehen, dass das Getriebesteuergerät 22 in Abhängigkeit von einer durch das Wählhebelsteuergerät 23 erfassten Wählhebelstellung des Wählhebels 24 ausgeschaltet wird. Da das Getriebesteuergerät 22 einen hohen Stromverbrauch aufweist, kann hierdurch der Stromverbrauch des Kraftfahrzeugs beziehungsweise der Vorrichtung 1 insgesamt deutlich verringert werden. Dem Fahrer bleibt es weiterhin überlassen, die Parksperre 2 mittels des Wählhebelsteuergeräts 23 zu betätigen. Insbesondere ist vorgesehen, dass das Getriebesteuergerät 22 ausgeschaltet wird, wenn sich der Wählhebel 24 in der Stellung N, also in einer Neutralstellung, befindet, in welcher kein Gang des Getriebesteuergeräts 22 eingelegt sein soll. Insbesondere wenn die Antriebsvorrichtung abgeschaltet, also beispielsweise ein Verbrennungsmotor ausgeschaltet ist, der sonst zum Aufladen des Energiespeichers 26 dienen könnte, bewirkt der verringerte Stromverbrauch durch das Ausschalten des Getriebesteuergeräts 22 eine wesentlich längere Standzeit als es bisher möglich war. Dadurch kann der Fahrer bei ausgeschaltetem Motor länger elektrische Funktionen des Fahrzeugs nutzen als bisher, die Betriebsfähigkeit wird länger aufrechterhalten als bisher. Sobald der Fahrer den Wagen wieder startet und/oder sobald der Wählhebel 24 in eine entsprechende andere Position verlagert wird, wird das Getriebesteuergerät 22 zweckmäßigerweise wieder aktiviert. Im Betrieb hält beim Ausfall des Wählhebelsteuergeräts das Schaltventil 17 die Parksperre ausgelegt, bei einem Ausfall des Getriebesteuergeräts 22 hält die Haltevorrichtung 4 die Parksperre 2 ausgelegt.

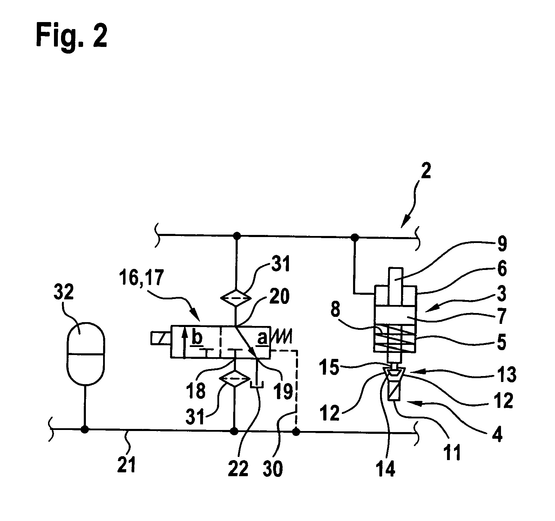

Figur 2 zeigt einen vergrößerten Ausschnitt der Aktoreinrichtung 3 sowie der Haltevorrichtung 5. In der vergrößerten Darstellung ist eine optionale Regelleitung 30 dargestellt, die die Druckleitung 21 mit einer Ventilfläche des Hydraulikventils 16 verbindet, sodass das Hydraulikventil 16 durch den Druck in der Druckleitung 21 in die Schaltstellung a gedrängt wird. Die Regelleitung 30 kann zusätzlich oder alternativ zu der dem Schaltventil zugeordneten Rückstellfeder vorgesehen sein. Zweckmäßigerweise sind dem Hydraulikventil 16 weiterhin einer oder mehrere Druckfilter 31 zugeordnet. An der Druckleitung 21 ist weiterhin ein hydraulischer Druckspeicher 32 vorgesehen, sodass auch bei Abschalten der Antriebsvorrichtung und/oder einer elektrischen Pumpe zum Fördern des Hydraulikmediums zumindest für einen gewissen Zeitraum ausreichend Druck zur Verfügung steht, um die Parksperre 2 auszulegen.

### BEZUGSZEICHENLISTE

- 1: Vorrichtung
- 2: Parksperre
- 3: Aktoreinrichtung
- 4: Haltevorrichtung
- 5: Hydraulischer Aktor
- 6: Zylinder
- 7: Kolben
- 8: Rückstellfeder
- 9: Sperrelement
- 10: Halteelement
- 11: Elektromagnet
- 12: Sperrmechanik
- 13: Greifarmpaar
- 14: Einführende
- 15: Verjüngung
- 16: Hydraulikventil
- 17: Schaltventil
- 18: Anschluss
- 19: Anschluss
- 20: Anschluss
- 21: Druckleitung
- 22: Getriebesteuergerät
- 23: Wählhebelsteuergerät
- 24: Wählhebel
- 25: Datenverbindung
- 26: Energiequelle
- 27: Sicherung
- 28: Sicherung
- 29: Aktor
- 30: Regelleitung
- 31: Druckfilter
- 32: Druckspeicher

## Patentansprüche

1. Vorrichtung (1) zum Betreiben einer Parksperre (2) eines Kraftfahrzeugs, wobei die Parksperre (2) eine betätigbare Aktoreinrichtung (3) zum Auslegen der Parksperre (2) entgegen eines Rückstelldrucks sowie eine betätigbare Haltevorrichtung (4) zum Halten der Parksperre (2) im ausgelegten Zustand umfasst, wobei die Vorrichtung (1) ein Wählhebelsteuergerät (23) und ein damit kommunizierendes Getriebesteuergerät (22) umfasst, wobei das Wählhebelsteuergerät (23) die Haltevorrichtung (4) und das Getriebesteuergerät (22) die Aktoreinrichtung (3) betätigt.

2. Vorrichtung nach Anspruch 1, **dadurch gekennzeichnet, dass** das Getriebesteuergerät (22) in Abhängigkeit von der Schaltstellung eines Wählhebels (24), die insbesondere durch das Wählhebelsteuergerät (23) erfassbar ist, abschaltbar ist beziehungsweise abgeschaltet wird.

3. Vorrichtung nach einem der vorhergehenden Ansprüche, **dadurch gekennzeichnet, dass** das Getriebesteuergerät (22) und das Wählhebelsteuergerät (23) durch mindestens eine kabelgebundene oder kabellose Datenverbindung (25) miteinander kommunizieren.

4. Vorrichtung nach einem der vorhergehenden Ansprüche, **dadurch gekennzeichnet, dass** das Wählhebelsteuergerät (23) als Slave ausgebildet ist, und das Getriebesteuergerät (22) als Master.

5. Vorrichtung nach einem der vorhergehenden Ansprüche, **dadurch gekennzeichnet, dass** das Wählhebelsteuergerät (23) und das Getriebesteuergerät (22) unabhängig voneinander mit einer Energiequelle (26) des Kraftfahrzeugs verbindbar/verbunden sind.

6. Vorrichtung nach einem der vorhergehenden Ansprüche, **dadurch gekennzeichnet, dass** die Aktoreinrichtung (3) als elektrisch betätigbare Aktoreinrichtung (3) ausgebildet ist und insbesondere ein elektrisch betätigbares Hydraulikventil (16) umfasst.

7. Vorrichtung nach einem der vorhergehenden Ansprüche, **dadurch gekennzeichnet, dass** das Hydraulikventil (16) insbesondere als Schaltventil (17) ausgebildet ist und in einer ersten Extremalstellung (b) einen die Parksperre betätigenden Aktor (5) der Aktoreinrichtung (3) mit einer Druckquelle (21,32) verbindet, um die Parksperre (2) entgegen dem Rückstelldruck auszulegen, und in einer zweiten Extremalstellung (a) den Aktor (5) hydraulisch drucklos schaltet.

8. Vorrichtung nach einem der vorhergehenden Ansprüche, **dadurch gekennzeichnet, dass** zur Erzeugung/Bereitstellung des Rückstelldrucks dem insbesondere hydraulisch betätigbaren Aktor (5) eine Rückstellfeder (8) zugeordnet ist.

9. Vorrichtung nach einem der vorhergehenden Ansprüche, **dadurch gekennzeichnet, dass** die Haltevorrichtung (4) eine insbesondere elektromagnetisch betätigbare Sperrmechanik (12) zum formschlüssigen Halten des Aktors (5) beziehungsweise der Parksperre (2) im ausgelegten Zustand aufweist.

10. Verfahren zum Betreiben einer Parksperre (2) eines Kraftfahrzeugs, wobei die Parksperre (2) eine betätigbare Aktoreinrichtung (3) zum Auslegen der Parksperre (2) entgegen eines Rückstelldrucks sowie eine betätigbare Haltevorrichtung (4) zum Halten der Parksperre (2) im ausgelegten Zustand umfasst, wobei die Haltevorrichtung (4) durch ein Wählhebelsteuergerät (23) und die Aktoreinrichtung (3) durch ein mit dem Wählhebelsteuergerät kommunizierendes Getriebesteuergerät (22) betätigt wird.

## Claims

1. A device (1) for operating a parking brake (2) of a motor vehicle, wherein said parking brake (2) comprises an actuatable actuator element (3) for disengaging the parking brake (2) counter to the restoring pressure, and an actuatable holding device (4) for holding the parking brake (2) when the latter is disengaged, wherein the device (1) comprises a selector control device (23) and a transmission control device (22) communicating therewith, wherein the selector control device (23) actuates the holding device (4) and the transmission control device (22) actuates the actuator element (3).

2. A device according to claim 1, **characterized in that** the transmission control device (22) can be switched off or is switched off depending on the switch position of a selector (24), which can be determined by the selector control device (23).

3. A device according to one of the preceding claims, **characterized in that** the transmission control device (22) and the selector control device (23) communicate with each other through at least a wired or a wireless data connection (25).

4. A device according to one of the preceding claims, **characterized in that** the selector control device (23) is designed as a slave, and the transmission control device (22) is designed as a master.

5. A device according to the preceding claims, **characterized in that** the selector control device (23) and the transmission control device (22) independently of each other are connectable/connected to an energy source (26) of the motor vehicle.

6. A device according to one of the preceding claims, **characterized in that** the actuator element (3) is designed as an electrically actuatable actuator element (3) and in particular comprises an electrically actuatable hydraulic valve (16).

7. A device according to one of the preceding claims, **characterized in that** the hydraulic valve (16) is designed in particular as a switch valve (17) and in a first extremal position (b) connects an actuator (5) of the actuator element (3) actuating the parking brake (2) with a pressure source (21, 32), in order to disengage the parking brake (2) counter to the restoring pressure, and in a second extremal position (a) depressurizes the actuator (5) hydraulically.

8. A device according to one of the preceding claims, **characterized in that** for the generation/provision of the restoring pressure a return spring (8) is assigned to the in particular hydraulically actuatable actuator (5).

9. A device according to one of the preceding claims, **characterized in that** the holding device (4) has an in particular electromagnetically actuatable blocking system (12) for positively holding the actuator (5) or the parking brake (2) in the disengaged state.

10. A method for operating a parking brake (2) of a motor vehicle, wherein the parking brake (2) comprises an actuatable actuator element (3) for disengaging the parking brake (2) counter to a restoring pressure as well as an actuatable holding device (4) for holding the parking brake (2) in the disengaged state, wherein the holding device (4) is actuated by a selector control device (23) and the actuating element (3) is actuated by a transmission control device (22) communicating with the selector control device.

## Revendications

1. Dispositif (1) pour actionner un frein de stationnement (2) d'un véhicule automobile, le frein de stationnement (2) comportant un dispositif actionneur (3) actionnable pour faire sortir le frein de stationnement (2) dans le sens inverse d'une pression de rappel ainsi qu'un dispositif de retenue (4) actionnable pour retenir le frein de stationnement (2) à l'état sorti, le dispositif (1) comportant un appareil de commande de levier de sélection (23) et un appareil de commande de boîte de vitesse communiquant avec celui-ci (22), l'appareil de commande de levier de sélection (23) actionnant le dispositif de retenue (4) et l'appareil de commande de boîte de vitesse (22) actionnant le dispositif actionneur (3).

2. Dispositif selon la revendication 1, **caractérisé en ce que** l'appareil de commande de boîte de vitesses (22) peut être désactivé ou est désactivé en fonction de la position de commutation d'un levier de sélection (24) qui peut être détectée en particulier par l'appareil de commande de levier de sélection (23).

3. Dispositif selon l'une quelconque des revendications précédentes, **caractérisé en ce que** l'appareil de commande de boîte de vitesses (22) et l'appareil de commande de levier de sélection (23) communiquent entre eux par au moins une liaison de données (25) câblée ou sans câble.

4. Dispositif selon l'une quelconque des revendications précédentes, **caractérisé en ce que** l'appareil de commande de levier de sélection (23) est réalisé comme esclave et l'appareil de commande de boîte de vitesses (22) comme maître.

5. Dispositif selon l'une quelconque des revendications précédentes, **caractérisé en ce que** l'appareil de commande de levier de sélection (23) et l'appareil de commande de boîte de vitesses (22) peuvent être/sont reliés indépendamment l'un de l'autre à une source d'énergie (26) du véhicule automobile.

6. Dispositif selon l'une quelconque des revendications précédentes, **caractérisé en ce que** le dispositif actionneur (3) est réalisé comme dispositif actionneur (3) actionnable électriquement et comporte en particulier une soupape hydraulique (16) actionnable électriquement.

7. Dispositif selon l'une quelconque des revendications précédentes, **caractérisé en ce que** la soupape hydraulique (16) est réalisée en particulier comme une soupape de commutation (17) et relie dans une première position extrême (b) un actionneur (5) actionnant le frein de stationnement du dispositif actionneur (3) à une source de pression (21, 32) afin de faire sortir le frein de stationnement (2) dans le sens inverse à la pression de rappel et commute hydrauliquement sans pression l'actionneur (5) dans une seconde position extrême (a).

8. Dispositif selon l'une quelconque des revendications précédentes, **caractérisé en ce qu'**un ressort de rappel (8) est associé pour la génération/la mise à disposition de la pression de rappel à l'actionneur (5) actionnable en particulier hydrauliquement.

9. Dispositif selon l'une quelconque des revendications précédentes, **caractérisé en ce que** le dispositif de retenue (4) présente un mécanisme de verrouillage (12) actionnable en particulier électromagnétiquement pour le maintien à complémentarité de formes de l'actionneur (5) ou du frein de stationnement (2) dans l'état sorti.

10. Procédé d'utilisation d'un frein de stationnement (2) d'un véhicule automobile, le frein de stationnement (2) comportant un dispositif actionneur (3) actionnable pour faire sortir le frein de stationnement (2) dans le sens inverse d'une pression de rappel ainsi qu'un dispositif de retenue (4) actionnable pour le maintien du frein de stationnement (2) dans l'état sorti, le dispositif de retenue (4) étant actionné par un appareil de commande de levier de sélection (23) et le dispositif actionneur (3) étant actionné par un appareil de commande de boîte de vitesses (22) communiquant avec l'appareil de commande de levier de sélection.
